# EUROPEAN PATENT APPLICATION

(11) **EP 4 529 967 A1**
(43) Date of publication of application: **02.04.2025**
(21) Application number: 23199948.3
(22) Date of filing: 27.09.2023
(51) Int. Cl.: B01D 29/35, B01D 36/02, C02F 1/42, H01M 8/00

(54) **FILTER UNIT WITH PARTICLE FILTER AND ION EXCHANGER AND COOLING CIRCUIT WITH FILTER UNIT**

(71) Applicant: MANN+HUMMEL GmbH, 71636 Ludwigsburg (DE)
(72) Inventor: KAGITHA, Lavanya, 71636 Ludwigsburg (DE); LEININGER, Simon, 71636 Ludwigsburg (DE); KRAVANJA, Axel, 71636 Ludwigsburg (DE)
(74) Representative: Mann + Hummel Intellectual Property

(57) **Abstract**

A filter unit (30) for a coolant, the filter unit (30) includes a housing (45), a particle filter (32) arranged in the housing (45), an ion exchanger (33) arranged in the housing (45), an inlet (35), a first outlet (39), and a main stream duct (63) extending between the inlet (35) and the first outlet (39), the particle filter (32) being arranged in the main stream duct (63). The filter unit (30) further includes a side stream duct (54) branching off from the main stream duct (63), and being configured to guide part of the coolant from the main stream duct (63) to the ion exchanger (33), and a second outlet (43) downstream of the ion exchanger (33).

## Description

### TECHNICAL FIELD

The invention relates to a filter unit for a coolant with a particle filter and an ion exchanger. Furthermore, the invention relates to a cooling circuit with the filter unit and a fuel cell.

### BACKGROUND ART

US 10,804,546 B2 discloses a filter unit with particle filter and ion exchanger, which are arranged in a housing. In addition, a cooling circuit is disclosed in which a pump, at least one heat exchanger and said filter unit are integrated in order to cool a fuel cell. The ion exchanger ensures the electrical conductivity of the coolant flowing through the fuel cell not to be too high in order to avoid electrical short-circuit effects in the fuel cell or to power losses.

In the filter unit of US 10,804,546 B2, the particle filter and the ion exchanger are formed as one component that is seated in a main stream duct inside the housing. The main stream duct extends from an inlet of the filter unit to an outlet of the filter unit. A main stream through the filter unit must therefore pass through the particle filter and the ion exchanger, which means that the operation of this filter unit is likely to involve comparatively high-pressure losses. Since they are combined in one component, the ion exchanger and particle filter can only be replaced together. Emergency operation of the filter unit, in which the ion exchanger can be replaced but the particle filter remains active to protect the fuel cell from particles, is not possible.

### SUMMARY

The invention is based on the object to provide a filter unit with an ion exchanger and a particle filter, which is efficient and can be operated in a simple and safe manner.

The object underlying the invention is solved with the combination of features according to claim 1. Embodiments of the invention can be taken from the subclaims to claim 1.

According to the invention, it is provided that a side stream duct branching off from the main stream duct, e.g., upstream of the particle filter or at least upstream of a filter section of the particle filter. The side stream duct is configured to guide a part of the coolant from the main stream duct to the ion exchanger. A second outlet is downstream of the ion exchanger.

The filter unit according to the invention ensures that only a side stream is passed through the ion exchanger. The main stream, which in one embodiment is more than 70 % or even more than 80 % of the total stream through the filter unit, flows through the particle filter arranged in the main stream duct without having to pass through the ion exchanger. By dividing the stream into the main stream and the side stream, the pressure losses occurring in the filter unit during operation can be kept low. The separate arrangement of particle filter and ion exchanger in the housing leads to a simple and compact design of the filter unit.

In addition to the filter section in which the actual particle filtering takes place, the particle filter can have a fastening section by which the particle filter is fastened and/or aligned in the main stream duct. For example, the fastening section can have a preferably circumferential contact surface that rests against an inner wall of the main stream duct.

The contact surface may be a substantially cylindrical shell surface with at least one opening through which the coolant can pass from the main stream duct into the side stream duct. In this embodiment, the cylindrical shell surface with the at least one opening is located upstream of the filter section of the filter unit. The total stream can be guided through the fastening section, whereby the side stream is guided through the opening in the shell surface into the side stream duct and the main stream passes through the filter section of the particle filter.

The filter unit may further include a coolant tank arranged in the housing, which is fluidically connected to an outlet of the ion exchanger. Thus, the side stream flows through the ion exchanger and then enters the coolant tank. The coolant can be calmed or degassed in the coolant tank. The coolant tank can also act as a compensation tank to compensate for pressure fluctuations in the filter unit and/or to hold a certain amount of coolant. The coolant can leave the coolant tank through the second outlet.

In one embodiment, the filter unit may further include a pressure control valve arranged at the coolant tank, and an exhaust air line connected to the pressure control valve. The pressure in the coolant tank can be limited by the pressure control valve. Air for venting the coolant tank or excess coolant can be discharged via the exhaust air line.

The ion exchanger can be a replaceable cartridge. The filter unit may further include a first valve upstream of the ion exchanger, and a second valve downstream of the ion exchanger. When the valves are closed, the cartridge is fluidically separated from the other components of the filter unit so that it is possible to replace the cartridge even if the filter unit continues to operate and the main stream is directed through the particle filter. When the valves are closed, the main stream corresponds to the total stream through the filter unit.

In one embodiment, the particle filter is arranged in the main stream duct in a replaceable manner. For this purpose, the filter unit can have an inlet connector that is detachably connected to the housing. In the connected state, the inlet connector can axially fix the particle filter in the main stream duct. In the non-connected state, the particle filter can be removed from the main stream duct. Preferably, the connection between the inlet connector and the housing is a screw connection.

The filter unit may further include a conductivity sensor upstream of the ion exchanger. Alternatively, the conductivity sensor can also be provided, as seen in the direction of flow, behind the ion exchanger (that means: downstream of the ion exchanger). The conductivity sensor can be used to determine the electrical conductivity of the coolant. For example, the measurement results of the conductivity sensor can be used to decide whether the ion exchanger in the filter unit must be replaced by a new ion exchanger. The conductivity sensor can also be used for a control by which the ratio of the side stream and the main stream is adjusted. Via the valve(s) described above, the flow through the ion exchanger can be increased, for example, if the electrical conductivity of the coolant is too high. The valves can therefore also be designed as control valves.

The main stream duct between the inlet and outlet of the filter unit preferably extends in a straight line. The main stream duct between the inlet and outlet can have a substantially constant or varying cross-section in terms of size and shape. In one embodiment, the main stream duct has the basic shape of a hollow cylinder. Such a rectilinear main stream duct can reduce flow losses. Also, the accommodation of the particle filter in the main stream duct and the possible exchangeability of the particle filter are easy to achieve by the use of such a rectilinear main stream duct.

In one embodiment, when the filter unit is in the upright position (operating position), the flow through the ion exchanger is from bottom-to-top. However, this is only one embodiment, and in other embodiments, the flow through the ion exchanger may be from top-to-bottom or from side-to-side. A longitudinal axis of the ion exchanger thereby runs vertically. An upper end of the ion exchanger can be engaged with a lid by which the ion exchanger can be fixed in the housing. The lid may be attached to the housing by suitable fastening means (for example, screw connection or bayonet connection). Once the lid is separated from the housing, in one embodiment, the ion exchanger can be pulled out of the housing along its longitudinal axis and replaced with a new ion exchanger.

The side stream duct can be delimited by a first integrally formed one-piece housing half of the housing and a separate cover plate. The first half of the housing can be an injection moulded part made of plastic. The separate cover plate makes it possible to design the side stream duct and also other components/areas of the filter unit, such as the coolant tank described above, in a comparatively flexible manner, while at the same time enabling simple manufacture of the first half of the housing.

A further object of the invention, the provision of a cooling circuit for a fuel cell, is solved by the combination of features according to claim 13. An embodiment can be taken from the subclaim to claim 13.

The cooling circuit according to the invention includes a pump and the filter unit described above, wherein the inlet of the filter unit is connected to a pump outlet of the pump. The first outlet of the filter unit is connected to a coolant inlet of the fuel cell. The second outlet of the filter unit is connected to a pump inlet of the pump so that the coolant passed through the ion exchanger is supplied to the pump inlet.

During operation of the cooling circuit, the pump pumps coolant through the inlet into the filter unit. The total stream into the filter unit is divided into the main stream and the side stream. The main stream is passed through the particle filter and leaves the filter unit through the first outlet. From the first outlet, the coolant filtered through the particle filter then flows into the fuel cell. After flowing through the fuel cell, the coolant is cooled, preferably by at least one heat exchanger or cooler, and flows to the pump inlet of the pump. Before the pump inlet, the coolant discharged from the fuel cell is mixed with the coolant that has passed through the ion exchanger and left the filter unit through the second outlet.

The exhaust air line from the coolant tank can be connected to a connection line between a coolant outlet of the fuel cell and the pump inlet. This connection ensures that unfiltered coolant loaded with particles does not enter the fuel cell, as the particle filter of the filter unit is compulsorily provided upstream of the coolant inlet of the fuel cell.

### BRIEF DESCRIPTION OF DRAWINGS

The invention is explained in more detail with reference to the embodiments shown in the drawing. It is shown in:
- Figure 1: cooling circuit with a fuel cell to be cooled;
- Figure 2: a first embodiment of a filter unit according to the invention in a side view;
- Figure 3: a front view of the filter unit of figure 2;
- Figure 4: a section along line A-A in Figure 3;
- Figure 5: a rear view of the filter unit of figure 2;
- Figure 6: a section along the line B-B in Figure 5;
- Figure 7: a second embodiment of the filter unit according to the invention in a side view with a partial section;
- Figure 8: a bottom view of the filter unit of Figure 7; and
- Figure 9: a section along the line C-C in Figure 8.

### DETAILED DESCRIPTION

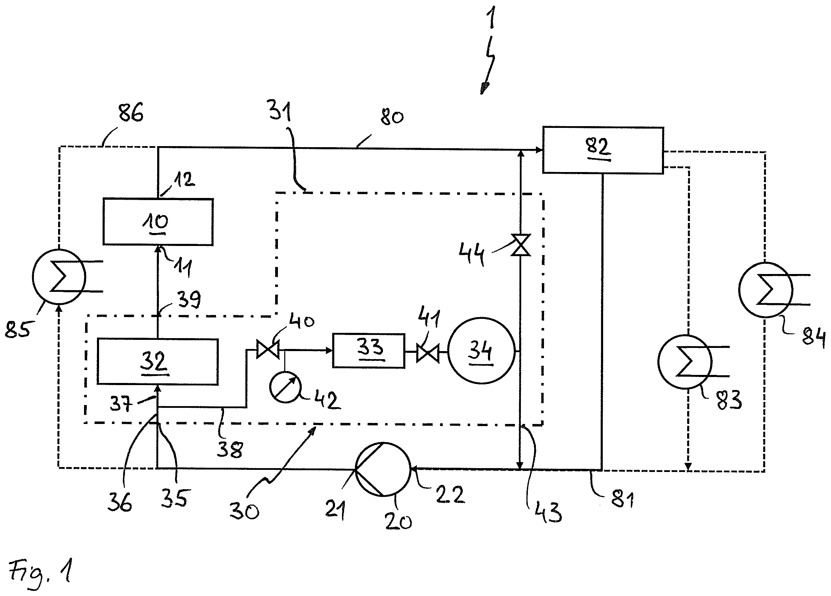

Figure 1 shows a cooling circuit 1 for a fuel cell 10. The cooling circuit 1 includes a pump 20 and a filter unit 30, the individual components of which are enclosed by a dotted-dashed system line 31 in the illustration in Figure 1. A liquid coolant circulates through the cooling circuit 1 via the pump 20.

The filter unit 30 includes a particle filter 32, an ion exchanger 33 and a coolant tank 34. The coolant passes from a pump outlet 21 of the pump 20 to an inlet 35 of the filter unit 30. Within the filter unit 30, a total stream 36 is divided into a main stream 37 and a secondary or side stream 38. The main stream 37 passes through the particle filter 32 to a first outlet 39 of the filter unit 30. The coolant filtered by the particle filter 32 flows from the first outlet 39 to a coolant inlet 11 of the fuel cell 10. The fuel cell 10 is cooled by the coolant, which leaves the fuel cell 10 at a coolant outlet 12 and is led back to the pump 20 via a connecting line 80. The coolant enters the pump 20 at a pump inlet 22.

The side stream 38 is guided through the ion exchanger 33, whereby a first valve 40 is arranged upstream of the ion exchanger 33 and a second valve 41 is arranged downstream of the ion exchanger 33. A conductivity sensor 42, by means of which the electrical conductivity of the coolant can be measured, is arranged upstream of the ion exchanger 33. After flowing through the ion exchanger 33, the coolant reaches the coolant tank 34. From the coolant tank 34, the coolant may flow to a pressure control valve 44 connected to the connecting line 80 and/or a second outlet 43 connected to a connecting line 81. The coolant from the coolant tank 34 reaches the pump inlet 22 of the pump 20 via the connection line 81. For venting the coolant tank 34 and/or for regulating a pressure in the coolant tank 34, the pressure control valve 44 is provided, through which air but also excess coolant can be drained from the coolant tank 34 into the connection line 80.

From the coolant outlet 12 of the fuel cell 10, the coolant is directed via the connection line 80 to a distribution valve 82, which divides the incoming coolant stream into different partial streams. A first partial stream is directed directly to the pump 20. A second partial stream is led back to the pump via a first heat exchanger or cooler 73. A third partial stream gives off heat to a second heat exchanger or cooler 74 and is only then routed to the pump 20. The extent of the individual partial streams can be adjusted via the distribution valve 82. If the second heat exchanger is part of an interior heating system of a vehicle in which the fuel cell 10 is installed, the temperature in the interior of the vehicle can be increased by increasing the partial flow through the heat exchanger 74.

Parallel to the total stream 36 or parallel to the filter unit 30, a further heat exchanger 85 is provided, which can be designed as an intercooler, for example. In contrast to the other heat exchangers 83, 84, however, the coolant absorbs heat here. The coolant flowing through the heat exchanger 85 reaches the distribution valve 82 via a connecting line 86 (see dashed line) and via the connecting line 80.

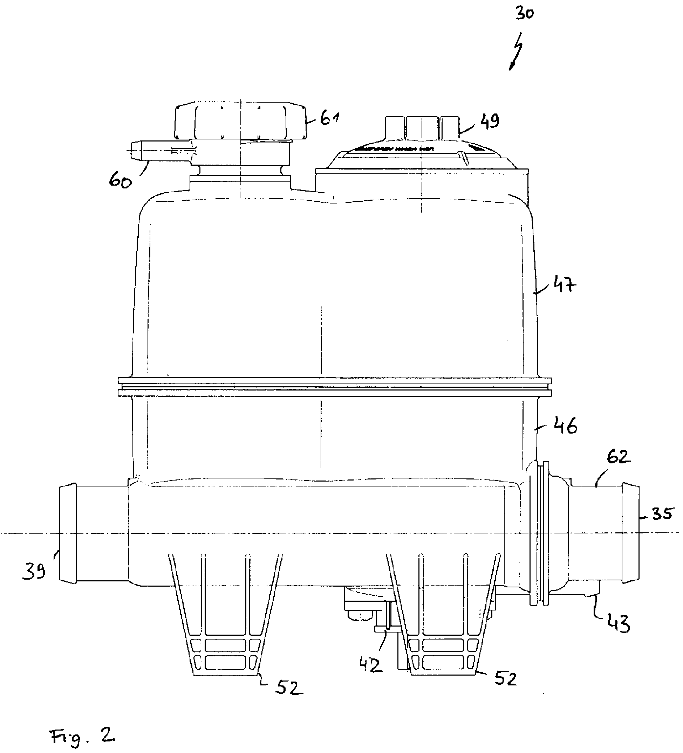

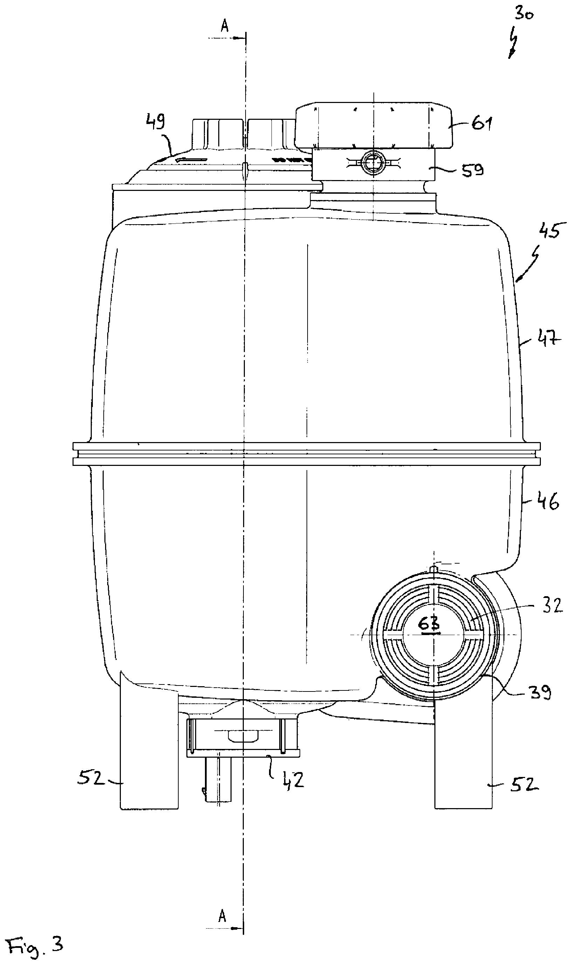

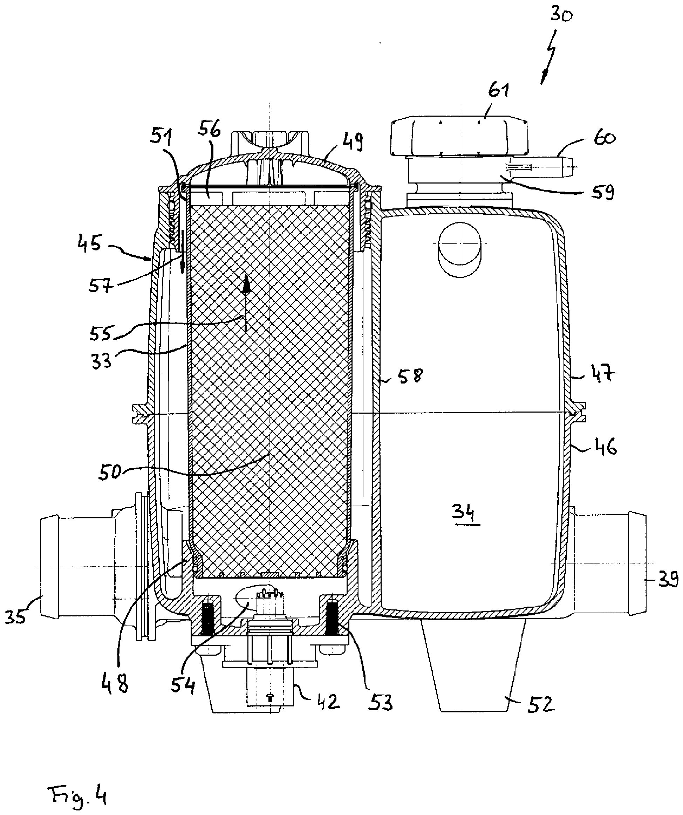

Figures 2 to 6 show various views of a first embodiment of the filter unit 30 according to the invention. Components that are similar or identical to the components shown in Figure 1 are given the same reference signs. Figure 4, which is the sectional view along line A-A in Figure 3, shows the ion exchanger 33 in longitudinal section. The ion exchanger 33 is designed here as a replaceable, cylindrical cartridge. The ion exchanger 33 is housed in a housing 45 including a first or lower housing half 46 and a second or upper housing half 47.

The housing 45 defines a first housing section in which the ion exchanger 33 is arranged. A circular socket 48 for the filter unit 30 is integrally moulded onto the first housing half 46. To replace the filter unit 30, a lid in the form of a screw lid 49 is unscrewed from the second housing half 47 so that the filter unit 30 can be pulled vertically upwards out of the first housing section along a longitudinal axis 50. A new cartridge can then be inserted through the upwardly open second housing half 47 until it comes into contact with the socket 48. By screwing on the screw lid 49, the ion exchanger 33 is fixed at an upper end 51 and thus aligned in the housing 45.

Between the lid 49 and the cartridge 33, coupling means can be provided by which the cartridge 33 and the lid 49 can be positively coupled to each other in the direction of the longitudinal axis in order to be able to pull the cartridge out of the housing 45 with the aid of the lid 49. By means of a special design of the coupling means, it is possible to provide a key-lock system between the lid 49 and the cartridge 33, so that the use of unsuitable cartridges is avoided or made more difficult.

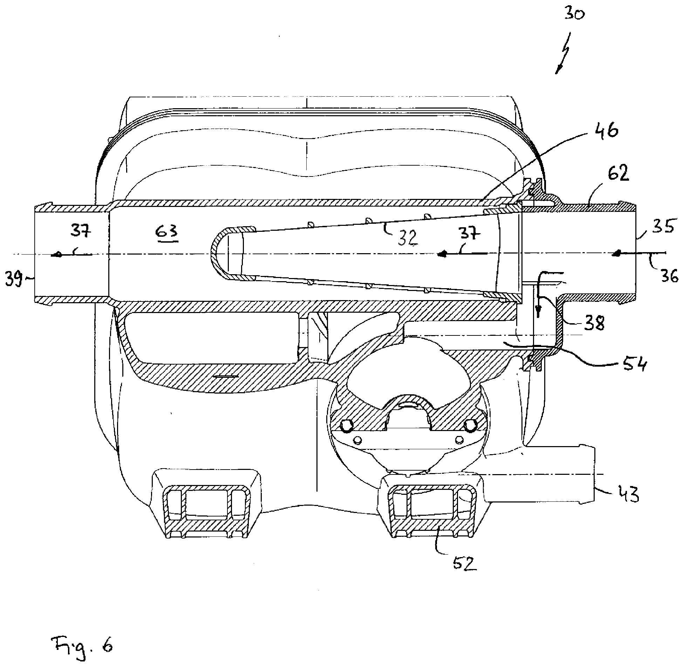

The conductivity sensor 42 is provided near the socket 48, which is attached to the first housing half 46 by screws 53. The conductivity sensor 42 can be used to determine the electrical conductivity of the coolant before it enters the ion exchanger 33. The coolant reaches the ion exchanger 33 through a side stream duct 54 (see also Figure 6). The flow of the coolant through the ion exchanger 33 is indicated by an arrow 55. The coolant thus flows from the bottom upwards through the ion exchanger 33. The coolant leaves the ion exchanger 33 through openings 56 at the upper end 51 of the ion exchanger 33. The upper end can also be referred to as the outlet of the ion exchanger. The coolant then flows down the side of the upper end of the ion exchanger 33 (see arrow 57) and then enters the coolant tank 34 through openings which are not visible in the sectional view of Figure 4. The coolant tank 34 is bounded by a second housing section of the housing 45. A partition wall 58 separates the first housing section from the second housing section.

An upper opening for the coolant tank 34 is provided in the second half of the second housing half 47. A valve unit 59 with the pressure control valve, through which the pressure in the coolant tank 34 can be controlled, sits on this opening. The valve unit 59 has a connector 60 for an exhaust line through which air or excess coolant can escape from the coolant tank 34. Furthermore, the valve unit 59 has a screw-off fill cap 61 to be able to fill the coolant tank 34.

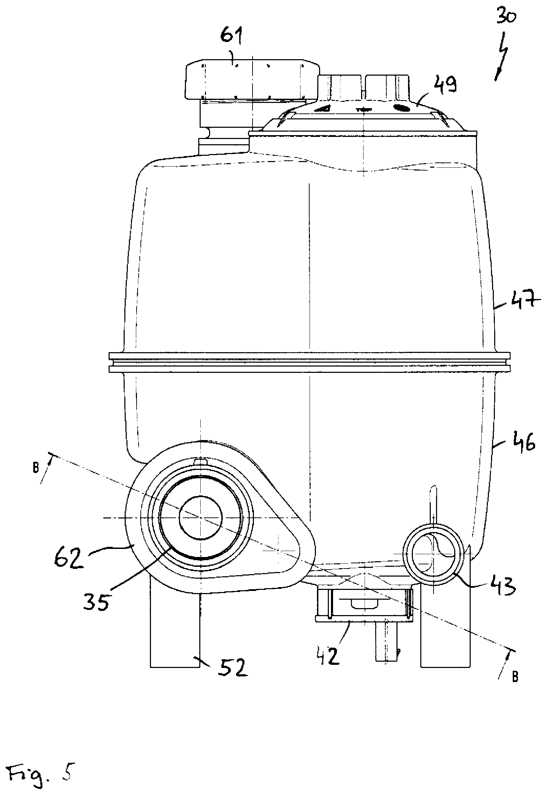

As can be seen in particular from Figure 6, which shows the section along the line B-B in Figure 5, a separate inlet connector 62 is provided at the inlet 35 of the filter unit 30, which is attached to the first housing half 46. Between the inlet 35 and the first outlet 39 there is provided a rectilinear main stream duct 63 of round cross-section, from which the side stream duct 54 branches off. The branching takes place upstream of the particle filter 32, which is placed in the main stream duct 63. The main stream is therefore only directed through the main stream duct 63 and thus only through the particle filter 32 and not through the ion exchanger 33. Most of the coolant that passes through the filter unit is thus directed through the main stream duct, which has comparatively small flow losses due to its shape and dimensioning. Figure 6 also shows how the total stream 36 is divided into the main stream 37 and the side stream 38.

Feet 52 are integrally formed to the first housing half 46 of the housing. The feet 52 guarantuee a stable operating position in which the longitudinal axis 50 of the ion exchanger extends along the vertical direction.

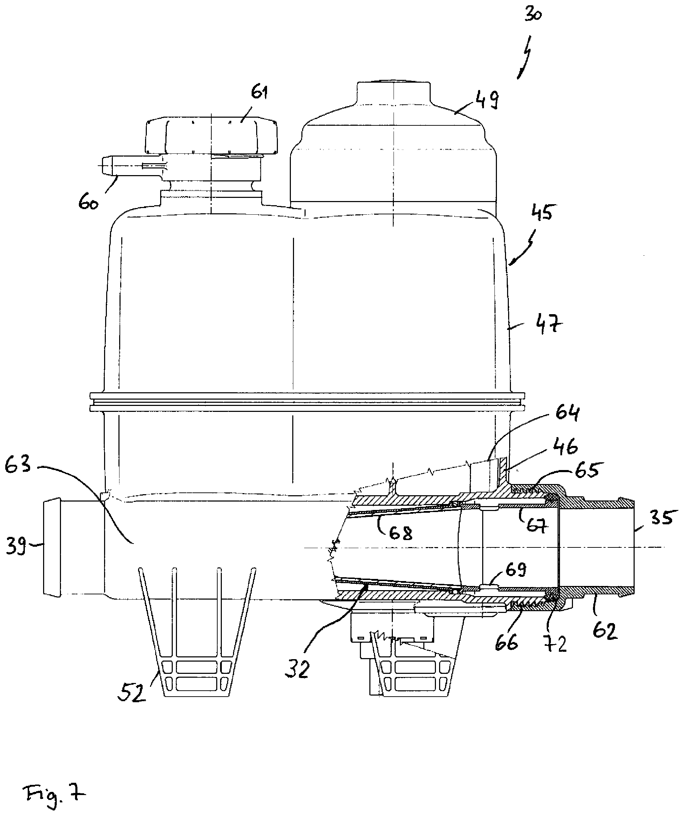

Figures 7 to 9 show a further embodiment for the filter unit 30 according to the invention. In the figure description for figures 7 to 9, particular reference is made to the differences from the first embodiment of figures 2 to 6. Accordingly, reference is made to the figure description for the first embodiment example with regard to the common features.

It can be seen from the broken away area 64 in Figure 7 that the inlet connector 62 of the second embodiment is detachably connected to the first housing half 46. For this purpose, the first housing half 46 has an external thread 65 which engages with an internal thread 66 of the inlet connector 62.

The particle filter 64 of the second embodiment has a hollow cylindrical fastening section 67 and a cone-shaped filter section 68. The fastening section 67 ensures the fastening and alignment of the particle filter 32 in the main stream duct 63. The actual filtering of the coolant takes place in the filter section 68. In the case of the particle filter 64 of the first embodiment, a distinction can basically also be made between a fastening section 67 and a filter section 68, whereby the fastening section 67 has only a short axial length.

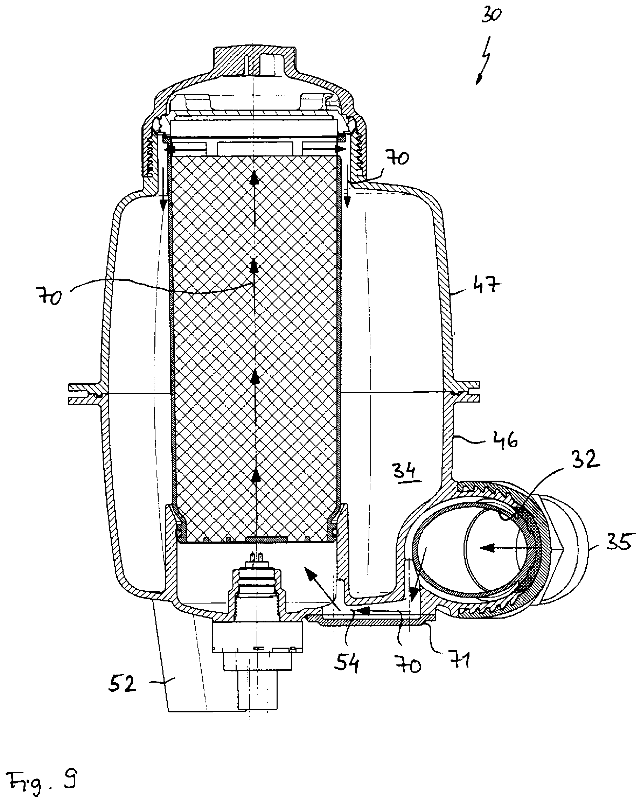

The fastening section 67 of the particle filter 32 of the second embodiment has a number of openings 69 on its circumferential surface so that some of the coolant flowing through the inlet connector 62 into the main stream duct 63 can enter the side stream duct (see Figure 9). The arrows 70 in Figure 9 show the flow of coolant from the inlet connector 62 through the side stream duct 54, the ion exchanger 33 to the coolant tank 34. The arrows 70 also show the flow of coolant through the ion exchanger 33 into the coolant tank 34.

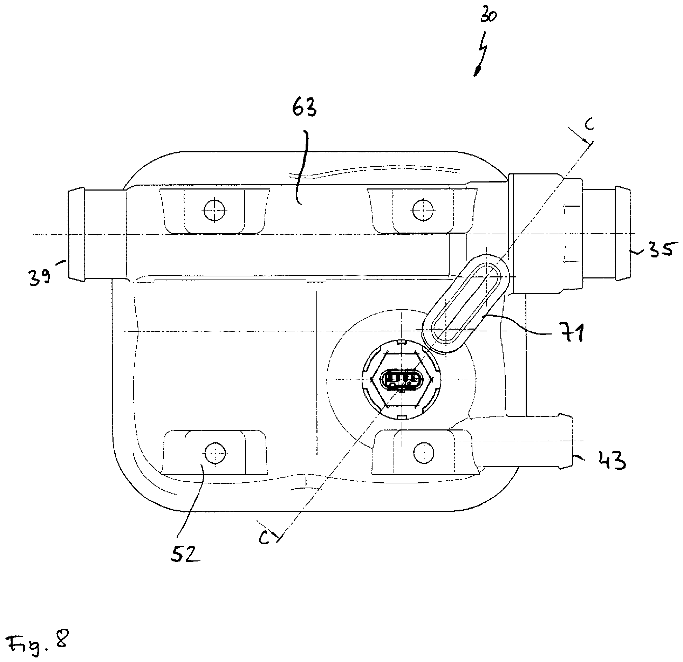

As can be seen in Figure 9, the side stream duct 54 is also delimited by a separate cover plate 71 in addition to the first housing half 46. The cover plate 71, which is shown in top view in Figure 8, is attached to the first housing half 46. Although the separate cover plate 71 increases the assembly effort for the filter unit, it facilitates the production of the first housing half 46 as a one-piece injection moulded part.

The sealing between the inlet connector 62 and the first housing half 46 is provided by a seal 72, which is a combination of radial and axial sealing having approximately the shape of a crescent in profile. The profile has a slightly curved outer surface and an inner surface with a small retaining contour. The retaining contour is seated in a circumferential groove of the fastening section 67 of the particle filter 32. In the assembled state, the seal 72 is in sealing contact with the first housing half 46, the inlet connector 62 and the fastening section 67 of the particle filter 32.

To replace the particle filter 32, the inlet connector 62 is unscrewed. The particle filter 32 can then be pulled, in the illustration of Figure 7, to the right out of the straight main stream duct 63. After inserting a new particle filter, the inlet connector is screwed back onto the first housing half 46 so that the particle filter 32 is fixed in the main stream duct 63.

### REFERENCE SIGNS LIST

- 1: Cooling circuit
- 10: Fuel cell
- 11: Coolant inlet
- 12: Coolant outlet
- 20: Pump
- 21: Pump outlet
- 22: Pump inlet
- 30: Filter unit
- 31: System line
- 32: Particle filter
- 33: Ion exchanger
- 34: Coolant tank
- 35: Inlet
- 36: Total stream
- 37: Main stream
- 38: Side stream
- 39: First outlet
- 40: First valve
- 41: Second valve
- 42: Conductivity sensor
- 43: Second outlet
- 44: Pressure control valve
- 45: Housing
- 46: First housing half
- 47: Second housing half
- 48: Socket
- 49: Lid / screw lid
- 50: Longitudinal axis
- 51: Top end / outlet
- 52: Foot
- 53: Screw
- 54: Side stream duct
- 55: Arrow / flow direction of the coolant
- 56: Opening
- 57: Arrow / direction of coolant flow
- 58: Partition wall
- 59: Valve unit
- 60: Connection
- 61: Fill cap
- 62: Inlet connector
- 63: Main stream duct
- 64: Broken away area
- 65: External thread
- 66: Internal thread
- 67: Fastening section
- 68: Filter section
- 69: Opening
- 70: Arrow / flow direction of the coolant
- 71: Cover plate
- 72: Seal
- 80: Connecting line
- 81: Connection line
- 82: Distribution valve
- 83: Heat exchanger / cooler
- 84: Heat exchanger / cooler
- 85: Heat exchanger / cooler

## Claims

1. A filter unit (30) for a coolant, the filter unit (30) comprising:
a housing (45);
a particle filter (32) arranged in the housing (45);
an ion exchanger (33) arranged in the housing (45);
an inlet (35);
a first outlet (39);
a main stream duct (63) extending between the inlet (35) and the first outlet (39), the particle filter (32) being arranged in the main stream duct (63);
a side stream duct (54) branching off from the main stream duct (63), and being configured to guide part of the coolant from the main stream duct (63) to the ion exchanger (33); and
a second outlet (43) downstream of the ion exchanger (33).

2. The filter unit (30) according to claim 1, wherein the particle filter (32) comprises a fastening section (67) for abutment against an inner wall of the main stream duct (63).

3. The filter unit (30) according to claim 2, wherein the fastening section (67) comprises a substantially cylindrical lateral surface with at least one opening (69) through which the coolant passes into the side stream duct (54).

4. The filter unit (30) according to any one of claims 1 to 3, further comprising a coolant tank (34) arranged in the housing (45) and fluidically connected to an outlet (51) of the ion exchanger (33).

5. The filter unit (30) according to claim 4, further comprising:
a pressure control valve (44) arranged at the coolant tank (34); and
an exhaust air line connected to the pressure control valve (44).

6. The filter unit (30) according to one of claims 1 to 5, wherein the ion exchanger (33) is a replaceable cartridge.

7. The filter unit (30) according to one of claims 1 to 6, further comprising:
a first valve (40) upstream of the ion exchanger (33); and
a second valve (41) downstream of the ion exchanger (33).

8. The filter unit (30) according to any one of claims 1 to 7, wherein the particle filter (32) is replaceably arranged in the main stream duct (63).

9. The filter unit (30) according to one of claims 1 to 8, further comprising a conductivity sensor (42) upstream or downstream of the ion exchanger (33).

10. The filter unit (30) according to any one of claims 1 to 4, wherein the ion exchanger (33) is configured to, in one operating position of the filter unit (30), be flowed through from bottom-to-top.

11. The filter unit (30) according to any one of claims 1 to 10, wherein the main stream duct (63) between the inlet (35) and the first outlet (39) is straight.

12. The filter unit (30) according to any one of claims 1 to 11, wherein the side stream duct (63) is limited by a first housing half (46) of the housing (45) and a separate cover plate (71).

13. The filter unit (30) according to any one of claims 1 to 12, wherein the side stream duct (54) branches off from the main stream duct (63) upstream of the particle filter (32) or at least upstream of a filter section (68) of the particle filter (32).

14. A cooling circuit (1) comprising:
a fuel cell (10);
a pump (20); and
the filter unit (30) according to any one of claims 1 to 13,
wherein the inlet (35) of the filter unit (30) is connected to a pump outlet (21) of the pump (20),
the first outlet (39) of the filter unit (30) is connected to a coolant inlet (11) of the fuel cell (10), and
the second outlet (43) is connected to a pump inlet (22) of the pump (20).

15. The cooling circuit (1) according to claim 13, wherein the cooling circuit (1) comprises the filter unit (30) according to claim 5, and
the exhaust air line is connected to a connecting line (80) between a coolant outlet (12) of the fuel cell (10) and the pump inlet (22).
